(19) Europäisches Patentamt

European Patent Office

Office européen des brevets

(11) **EP 4 614 431 A1**

(12) **EUROPEAN PATENT APPLICATION**

(43) Date of publication:
**10.09.2025  Bulletin 2025/37**

(21) Application number: **25161726.2**

(22) Date of filing: **05.03.2025**

(51) International Patent Classification (IPC):
**G06T 3/4046** (2024.01)      **G06T 3/4053** (2024.01)

(52) Cooperative Patent Classification (CPC):
**G06T 3/4053; G06T 3/4046; G06V 10/82; G06V 20/625; G06V 20/63**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.03.2024  KR 20240031652**
**18.02.2025  KR 20250021027**

(71) Applicant: **Thinkware Corporation**
**Seongnam-si, Gyeonggi-do 13493 (KR)**

(72) Inventors:
- **Park, Dongwoo**
**Seongnam-si (KR)**
- **Ko, Sukpil**
**Seongnam-si (KR)**

(74) Representative: **Kim Kang, Jae Hee**
**Venner Shipley LLP**
**200 Aldersgate**
**London EC1A 4HD (GB)**

(54) **ELECTRONIC DEVICE FOR RESTORING IMAGE BY USING INTRINSIC INFORMATION OF INTERMEDIATE LAYER IN MODEL TRAINED TO OUTPUT EXPLICIT INFORMATION AND METHOD THEREOF**

(57)     According to an embodiment, an electronic device receives a request to restore a first image of a first resolution, to an image of a second resolution larger than the first resolution. The electronic device, based on the received request, executes an image restoration model including an encoder to extract feature information from the first image, a sub-model to determine a text probability map with respect to the first image, a fusion layer to combine implicit information of an intermediate layer of the sub-model, which is positioned prior to an output layer trained to output the text probability map, and the feature information, and a decoder to generate an image of the second resolution, which is connected to the fusion layer. The electronic device provides, as a response to the request, a second image of the second resolution that is obtained based on execution of the image restoration model.

FIG. 1

EP 4 614 431 A1

**Description**

**[Technical Field]**

The present disclosure relates to an electronic device for restoring an image by using implicit information of an intermediate layer in a model trained to output explicit information and a method thereof.

**[Background Art]**

Technology for processing a photo and/or a video using artificial intelligence is being developed. For example, technology is being developed to classify a subject (e.g., an object including a person, an animal, and/or a vehicle) captured by a photo and/or a video. For example, technology is being developed to recognize one or more characters (or a string) associated with a photo and/or a video.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

According to an embodiment, a non-transitory computer readable storage medium storing instructions may be provided. The instructions, when executed by at least one processor of an electronic device individually or collectively, may cause the electronic device to receive a request to restore a first image of a first resolution, to an image of a second resolution larger than the first resolution. The instructions, when executed by the at least one processor individually or collectively, may cause the electronic device to, based on the received request, execute an image restoration model including, an encoder to extract feature information from the first image, a sub-model to determine a text-probability map with respect to the first image, a fusion layer to combine implicit information of an intermediate layer of the sub-model, which is positioned prior to an output layer trained to output the text probability map, and the feature information, and a decoder to generate an image of the second resolution, which is connected to the fusion layer. The instructions, when executed by the at least one processor individually or collectively, may cause the electronic device to provide, as a response to the request, a second image of the second resolution that is obtained based on execution of the image restoration model.

According to an embodiment, an electronic device may comprise memory storing instructions, and at least one processor configured to execute the instructions. The instructions, when executed by the at least one processor individually or collectively, may cause the electronic device to receive a request to restore a first image of a first resolution, to an image of a second resolution larger than the first resolution. The instructions, when executed by the at least one processor individually or collectively, may cause the electronic device to, based on the received request, execute an image restoration model including an encoder to extract feature information from the first image, a sub-model to determine a text-probability map with respect to the first image, a fusion layer to combine implicit information of an intermediate layer of the sub-model, which is positioned prior to an output layer trained to output the text probability map, and the feature information, and a decoder to generate an image of the second resolution, which is connected to the fusion layer. The instructions, when executed by the at least one processor individually or collectively, may cause the electronic device to provide, as a response to the request, a second image of the second resolution that is obtained based on execution of the image restoration model.

According to an embodiment, a method of an electronic device may be provided. The method may comprise, based on receiving an image, obtaining a sub-model trained to output a text-probability map indicating one or more characters associated with the image. The method may comprise performing, using the sub-model, training of an image restoration model including an encoder to extract feature information from an input image, a fusion layer to combine implicit information of an intermediate layer of the sub-model, prior to an output layer of the sub-model which receives the input image, and the feature information, and a decoder, that is connected to the fusion layer, to generate an output image having a second resolution greater than a first resolution of the input image. The method may comprise providing the image restoration model as a portion of a software application to restore the image.

According to an embodiment, an electronic device may comprise memory storing instructions, and at least one processor configured to execute the instructions. The instructions, when executed by the at least one processor individually or collectively, may cause the electronic device to, based on receiving an image, obtain a sub-model trained to output a text-probability map indicating one or more characters associated with the image. The instructions, when executed by the at least one processor individually or collectively, may cause the electronic device to perform, using the sub-model, training of an image restoration model including an encoder to extract feature information from an input image, a fusion layer to combine implicit information of an intermediate layer of the sub-model, prior to an output layer of the sub-model which receives the input image, and the feature information, and a decoder, that is connected to the fusion layer, to generate an output image having a second resolution greater than a first resolution of the input image. The instructions, when executed by the at least one processor individually or collectively, may cause the electronic device to provide the image restoration model as a portion of a software application to restore the image.

**[Description of the Drawings]**

FIG. 1 illustrates an exemplary block diagram of an electronic device for restoring at least a portion of an image.
FIG. 2 illustrates an exemplary block diagram of a structure of an image restoration model executed by an electronic device according to an embodiment.
FIG. 3 illustrates an exemplary block diagram of a structure of a sub-model in an image restoration model trained to output a text probability map.
FIG. 4 illustrates an exemplary block diagram of a structure of an image restoration model executed by an electronic device according to an embodiment.
FIG. 5 illustrates an exemplary block diagram of an image restoration model connected to a teacher model.
FIG. 6 illustrates graphs for describing a performance of an electronic device executing an image restoration model according to an embodiment.
FIG. 7 illustrates graphs for describing a performance of an electronic device executing an image restoration model according to an embodiment.
FIGS. 8A and 8B illustrate at least one license plate (or number plate), which is a subject included in an image restored by an image restoration model, according to an embodiment.
FIG. 9 is a diagram for describing an overconfidence phenomenon.

**[Mode for Invention]**

Hereinafter, various embodiments of the present document will be described with reference to the accompanying drawings.

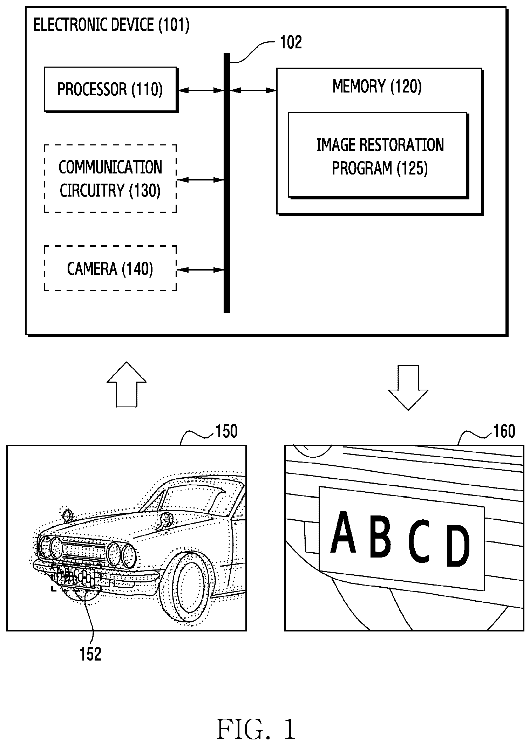

FIG. 1 illustrates an exemplary block diagram of an electronic device 101 to restore at least a portion of an image 150. The electronic device 101 may be configured to at least partially restore or enhance the image 150. Restoring or enhancing the image 150 may include an operation of improving visibility of a subject represented by the image 150 by compensating for distortion included in the image 150, such as blur, afterimage, and optical flow.

Referring to FIG. 1, the image 150 including a portion 152 associated with a license plate (or a number plate) is exemplarily illustrated. For example, the image 150 may be transmitted from an external electronic device to the electronic device 101 through communication circuitry 130. For example, the image 150 may be obtained using a camera 140 included in the electronic device 101. For example, the image 150 may be a file with a format based on a form compressing and storing an image such as a joint photographic experts group (jpeg), a Portable Network Graphics (PNG). For example, the image 150 may include raw data obtained from the camera 140. For example, the image 150 may be included in a sequence (e.g., a video) of image frames, which is included in a video and set to be displayed sequentially. A means for obtaining or receiving the image 150 is not limited to the communication circuitry 130 and/or the camera 140 illustrated in FIG. 1.

Referring to the exemplary image 150 of FIG. 1, an exemplary subject such as a vehicle may be captured. The image 150 may be distorted according to an environment in which a subject is photographed. For example, in case that the subject is moving (e.g., driving of a vehicle), and/or a camera (e.g., the camera 140) controlled to obtain the image 150 is moving (or shaking), an appearance of the subject represented by pixels of the image 150 may be distorted. According to an embodiment, the electronic device 101 may enable the appearance of the subject represented by the image 150 to be clear, by at least partially reducing or removing the distortion generated in the image 150.

Referring to FIG. 1, an exemplary hardware configuration of the electronic device 101 to at least partially restore the image 150 is illustrated. For example, the electronic devices 101 may include a personal computer such as a laptop and a desktop, a smartphone, a smart pad, and a tablet PC. For example, the electronic device 101 may include a smart accessory such as a smartwatch, a smart ring, and/or a head-mounted device (HMD). For example, the electronic device 101 may be referred to as a mobile device, user equipment (UE), a multifunction device, a portable communication device, and/or a portable device. For example, the electronic device 101 may be included as an electronic control unit (ECU) in a vehicle (e.g., an electric vehicle (EV)). For example, the electronic device 101 may include a server of a service provider that provides a service for restoring the image 150. The server may include one or more PCs and/or workstations.

Referring to FIG. 1, according to an embodiment, the electronic device 101 may include at least one of a processor 110, memory 120, the communication circuitry 130, or the camera 140. According to an embodiment, the communication circuitry 130 and/or the camera 140 may not be included in the electronic device 101. For example, the communication circuitry 130 and/or the camera 140 may be disposed outside the electronic device 101 and may be electrically connected to the electronic device 101.

Referring to FIG. 1, the processor 110, the memory 120, the communication circuitry 130, and the camera 140 may be electronically and/or operably coupled with each other by an electronical component such as a communication bus 102. Hereinafter, electronical components being operably combined may mean that a direct connection or an indirect connection between first electronical components and second electronical components is established by wire or wirelessly so that a second electronical component is controlled by a first electronical component. Although illustrated based on different blocks, an embodiment is not limited thereto, and a portion of (e.g., at least a portion of the processor 110, the memory 120, and the communication circuitry 130) the electronical components of FIG. 1 may be included in a single integrated circuit such as a system on a chip (SoC). A type and/or the number of electronical components included in the electronic device 101 is not limited as illustrated in FIG. 1. For example, the electronic device 101 may include only a portion of the electronical components illustrated in FIG. 1.

The processor 110 of the electronic device 101 according to an embodiment may include circuitry (e.g., processing circuitry) for processing data based on one or more instructions. The circuitry for processing data may include, for example, an arithmetic and logic unit (ALU), a floating point unit (FPU), a field programmable gate array (FPGA), a central processing unit (CPU), a graphic processing unit (GPU), a neural processing unit (NPU), and/or an application processor (AP). For example, the number of the processors 110 may be one or more. The processing circuitry of the processor 110 that loads (or fetches) an instruction and performs a calculation corresponding to the loaded instruction may be referred to or referenced as core circuitry (or a core). For example, the processor 110 may have a structure of a multi-core processor including a plurality of core circuitries, such as a dual core, a quad core, a hexa core, or an octa core. A function and/or an operation described with reference to the present disclosure may be individually and/or collectively performed by one or more processing circuitries included in the processor 110.

According to an embodiment, the memory 120 of the electronic device 101 may include circuitry for storing data and/or an instruction inputted and/or outputted to the processor 110. The memory 120 may include, for example, volatile memory such as random-access memory (RAM) and/or non-volatile memory such as read-only memory (ROM). The non-volatile memory may be referred to as storage. The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, a solid state drive (SSD), and an embedded multi media card (eMMC). The memory 120 may include one or more storage mediums (e.g., the volatile memory and/or nonvolatile memory described above) positioned in the electronic device 101 in a distributed manner. The processor 110 of the electronic device 101 may perform a function and/or an operation indicated by instructions, by executing the instructions of the memory 120 in the electronic device 101. For example, in case that the electronic device 101 includes at least one processor, the at least one processor may be configured to execute the instructions collectively or individually.

According to an embodiment, the communication circuitry 130 of the electronic device 101 may include hardware for supporting transmission and/or reception of an electrical signal between the electronic device 101 and the external electronic device (e.g., a user terminal configured to transmit the image 150). The communication circuitry 130 may include at least one of, for example, a modem, an antenna, and an optic/electronic (O/E) converter. The communication circuitry 130 may support transmission and/or reception of an electrical signal based on various types of protocols, such as Ethernet, a local area network (LAN), a wide area network (WAN), wireless fidelity (WiFi), near field communication (NFC), Bluetooth, bluetooth low energy (BLE), ZigBee, long term evolution (LTE), fifth generation (5G), a new radio (NR), sixth generation (6G), and/or above-6G.

According to an embodiment, the camera 140 of the electronic device 101 may include one or more optical sensors (e.g., a charged coupled device (CCD) sensor and a complementary metal oxide semiconductor (CMOS) sensor) that generate an electrical signal indicating a color and/or brightness of light. The plurality of optical sensors included in the camera 140 may be disposed in a form of a 2 dimensional array. The camera 140 may generate 2 dimensional frame data corresponding to light reaching the optical sensors of the 2 dimensional array, by obtaining an electrical signal of each of the plurality of optical sensors substantially simultaneously. For example, photo data captured using the camera 140 may mean a 2 dimensional frame data obtained from the camera 140. For example, video data captured using the camera 140 may mean a sequence of a plurality of 2 dimensional frame data obtained from the camera 140.

Referring to FIG. 1, the processor 110 of the electronic device 101 according to an embodiment may at least partially restore or enhance the image 150 by executing an image restoration program 125. The processor 110 (e.g., the CPU, the GPU, and/or the NPU) executing the image restoration program 125 may perform calculations for restoring the image 150. The calculations may be associated with a computational model (e.g., an artificial neural network, and/or a neural network) configured to simulate a neural activity of a living organism. The neural activity may include, for example, a cognitive activity, an inference activity, and/or a creative activity of a living organism. For example, instructions indicating the computational model, formulas associated with the computational model, and/or a constant (e.g., coefficients and/or weights) included in the formulas, may be at least partially included in the image restoration program 125.

According to an embodiment, the processor 110 of the electronic device 101 may restore or enhance the portion 152 (e.g., a portion of an object in which one or more characters are printed is captured, such as a number plate and/or a sign plate) in which at least one character is captured, in the image 150. For example, in the image 150, the electronic device 101 may extract or segment (or crop) the portion 152 associated with at least one character. The portion 152 may be referred to as a region of interest (ROI). The processor 110 may restore or enhance the portion 152 by executing the image restoration program 125.

In an embodiment, the electronic device 101 may increase or enhance a resolution of a scene by recognizing text (e.g., text that is indicated as being captured or included in the scene) associated with the scene such as the image 150. For example, in case of detecting one or more characters from a scene of a relatively low resolution (or small size), the electronic device 101 may generate another scene corresponding to the scene and having a higher resolution (or a larger size) than the resolution of the scene, by using a shape and/or an appearance of the detected one or more characters. For example, with respect to a scaling factor f, from a scene with a width w and a height h, the electronic device 101 may generate or output a scene with a width fw and a height fh.

In an embodiment, in terms of recognizing text and generating a high-resolution scene, the image restoration program 125 and/or artificial intelligence driven by the image restoration program 125 may be referred to as a scene text image super-resolution (STISR) and/or a model for the STISR. A performance of the STISR may be evaluated using accuracy (e.g., STISR accuracy) of a character included in the high-resolution scene generated by executing the STISR.

Referring to FIG. 1, an image 160 that the electronic device 101 outputs as a result of restoring the portion 152 of the image 150 is illustrated. The image 150 and/or the portion 152 may be referred to as an input image in terms of being inputted to the processor 110 of the electronic device 101. The image 160 may be referred to as an output image in terms of output data corresponding to the input image. According to an embodiment, the electronic device 101 may obtain information indicating one or more characters associated with the portion 152 by using an artificial intelligence model trained to recognize one or more characters from an image. By using the information, the electronic device 101 may generate or output the image 160 as a high-resolution image corresponding to the portion 152.

Referring to FIG. 1, the image 160 may have a larger size than the portion 152 and/or a higher resolution than the portion 152. Dimensions (e.g., a width and/or a height) of the image 160 may be greater than dimensions of the portion 152. For example, the image 160 may have the same dimensions and/or resolution as the image 150. In an embodiment of receiving the image 150 and/or the portion 152 from the external electronic device through the communication circuitry 130, the electronic device 101 may receive a request for restoring the portion 152 of the image 150 with a first resolution to the image 160 with a second resolution greater than the first resolution. From a signal received from the external electronic device, the electronic device 101 may identify or detect the image 150 and/or the portion 152. The signal may include a command and/or an operand indicating the request for restoration of the portion 152. In an embodiment of receiving the entire image 150 including the portion 152, the processor 110 of the electronic device 101 may extract or segment the portion 152 in which a subject relation to one or more characters is captured, such as a number plate. The portion 152 may be used as an image used for restoration.

Based on the request for restoring the image 150 and/or the portion 152, the electronic device 101 may execute an artificial intelligence model (e.g., an image restoration model) provided by the image restoration program 125. The electronic device 101 may provide the image 160 of the second resolution, obtained based on the execution of the image restoration model, as a response to the request. For example, the electronic device 101 may transmit a signal including the image 160 to the external electronic device through the communication circuitry 130.

In an embodiment, the image restoration model executed by the image restoration program 125 may include a sub-model trained to recognize one or more characters (e.g., indicated to be captured by an input image) associated with the input image (e.g., the portion 152 and/or the image 150 including the portion 152) inputted to the image restoration model. The sub-model, which is information (e.g., explicit information) readable by the processor 110 executing a software application distinct from the image restoration model and/or the image restoration program 125, may be trained to output information indicating the one or more characters associated with the input image, degrees to which each of the one or more characters is associated with the input image (e.g., probabilities that one or more characters are captured by the input image), and/or a positional relationship of the one or more characters (e.g., a position and/or an order of each of the one or more characters in a string).

For example, the information outputted from the sub-model may be referred to as text probability information in terms of including probabilities indicating text indicated to be captured by the input image. The text probability information may be referred to as text categorical information, text probability, a text probability map, text prior information, and/or text distribution. For example, the text probability information may include category information of text and/or information indicating a visual cue for text in an image.

According to an embodiment, the electronic device 101 may be trained to generate the image 160 using an intermediate state and/or intermediate information of the sub-model trained to output explicit information such as the text probability information. For example, among nodes (e.g., perceptrons) of the sub-model, which are distinguished by a plurality of layers, values of nodes that are different from nodes of an output layer including nodes corresponding to each element of the text probability information may be directly transmitted to another sub-model of the image restoration model. For example, an intermediate layer of the sub-model may be connected to the other sub-model of the image restoration model.

For example, values of nodes included in the intermediate layer may be implicit information that is distinct from explicit information. The implicit information may include more detailed information with respect to an input image than text probability information, which includes only probabilities that the input image (e.g., the portion 152 and/or the image 150) corresponds to each of a plurality of characters. By executing the image restoration model using the implicit information, the electronic device 101 may restore the portion 152 more accurately. For example, the electronic device 101 may obtain or generate the image 160 that more accurately represents one or more characters included in the portion 152. In the example, since more accurately recognizing or representing one or more characters from the portion 152, when receiving requests to repeatedly restore the portion 152, a plurality of images (e.g., the image 160) generated in response to the requests may include similar characters to each other.

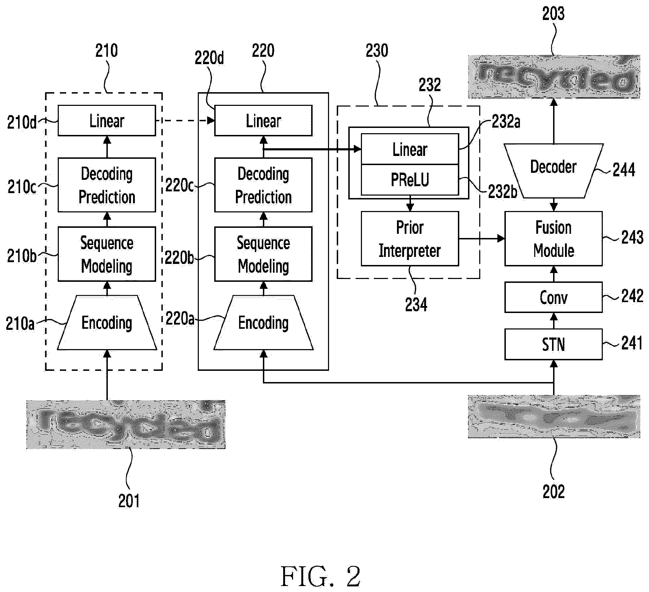

Hereinafter, an exemplary structure of the image restoration model executed by the image restoration program 125 and a process of training the image restoration model will be exemplarily described with reference to FIGS. 2 to 5.

FIG. 2 illustrates an exemplary block diagram of a structure of an image restoration model executed by an electronic device (e.g., the electronic device 101 of FIG. 1) according to an embodiment. The electronic device 101 and/or the processor 110 of FIG. 1 may execute the image restoration model described with reference to FIG. 2 by executing an image restoration program 125.

Hereinafter, an operation of executing an artificial intelligence model, such as the image restoration model, may include operations of performing one or more calculations associated with the artificial intelligence model by using a processor device (e.g., the processor 110 of FIG. 1 including the GPU and/or the NPU) of the electronic device. The operation of executing the artificial intelligence model may include an operation of inputting commands (or instructions) indicating the calculations to the GPU and/or the NPU to perform the calculations by the GPU and/or the NPU. The operation of executing the artificial intelligence model may include an operation of inputting data (e.g., the input image such as the image 150 and/or the portion 152 of FIG. 1) to be at least partially changed by the calculations to the GPU and/or the NPU. Although the operation of executing the artificial intelligence model based on the GPU and/or the NPU has been exemplarily described, an embodiment is not limited thereto, and an operation of executing the artificial intelligence model using a CPU may also be performed similarly to the above-described operation.

Referring to FIG. 2, calculations performed by the image restoration model are illustrated as a plurality of blocks for distinguishing types and/or an order of the calculations. Any one block of FIG. 2 may correspond to a group of calculations performed while executing the artificial intelligence model (e.g., the image restoration model). Each of the blocks of FIG. 2 may be referred to as a computation, layer(s), a sub-model and/or a module for the artificial intelligence model. Referring to FIG. 2, the image restoration model including a teacher model 210 connected to the image restoration model is exemplarily illustrated to train at least a portion of the image restoration model.

For example, the image restoration model may include an encoder (e.g., a combination of a spatial transformer networks (STN) computation 241 and a convolution computation 242) for extracting feature information from an image. The encoder including the STN calculation 241 and/or the convolution calculation 242 may include a shallow convolutional neural network (CNN) that has a small loss of structural information (or spatial information) required for restoring the image. The encoder (or a STISR) of the image restoration model may include a relatively small number of layers to reduce the loss of the structural information (or the spatial information) of a low-resolution image when extracting a feature of the low-resolution image to perform a low-level vision task (e.g., a task of increasing a resolution of an image). By executing the encoder of the image restoration model, the electronic device may generate or obtain feature information on an input image 202. The feature information may include summarized (or reduced dimensional) information of the input image 202 to specify or distinguish the input image 202. The feature information may include positions and/or characteristics of one or more pixels uniquely included in the input image 202, such as a feature point (or a key point) and/or a boundary line.

For example, the image restoration model may include a sub-model 220 for determining a text probability map with respect to the input image 202. The teacher model 210 may generate training information (e.g., ground truth data and input data corresponding to the ground truth data) used to train the sub-model 220 using knowledge distillation. The number of calculations of the sub-model 220 and parameters (e.g., coefficients and/or weights) used in the calculations, may be less than the number of calculations of the teacher model 210 and parameters used in the calculations of the teacher model 210. For example, the sub-model 220 may be pre-trained by the teacher model 210 executed using the parameters more than the parameters for the sub-model 220.

In an embodiment, the teacher model 210 used for training the sub-model 220 may be trained to recognize one or more characters from a scene such as an image 201. In terms of character recognition, the teacher model 210 may be referred to as a scene-text recognizer (STR) and/or a STR model. The teacher model 210 may be configured to recognize or process a feature such as a shape and/or a position of the one or more characters in the image 201.

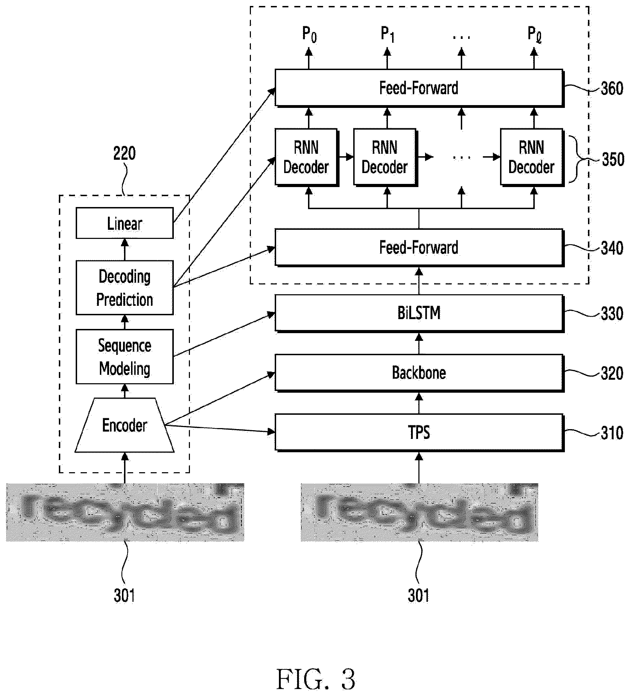

Referring to FIG. 2, types and orders of calculations of the teacher model 210 and the sub model 220 may be similar or identical to each other. For example, when executing the sub-model 220, the electronic device may obtain or generate output data (e.g., text probability information and/or the text probability map) by sequentially performing an encoding computation 220a, a sequence modeling computation 220b, a decoding prediction computation 220c, and a linearization computation 220d on the input image 202. The computations (e.g., the encoding computation 220a, the sequence modeling computation 220b, the decoding prediction computation 220c, and the linearization computation 220d) sequentially performed in the sub-model 220 may correspond to computations (e.g., an encoding computation 210a, a sequence modeling computation 210b, a decoding prediction computation 210c, and a linearization computation 210d) sequentially performed in the teacher model 210, respectively. A connection of the computations described above may have a structure of thin plate spline transformation (TPS)- Residual neural Network (ResNet)-bidirectional long-short term memory (BiLSTM)-attention mechanism (TRBA). An exemplary structure of the sub-model 220 having a structure of the TRBA will be described in detail with reference to FIG. 3. An embodiment is not limited to thereto, and another structure (or a topology) such as a convolution-recurrent neural network (CRNN), an autonomous, bidirectional and iterative network (ABINet), and/or a permuted autoregressive sequence (PARseq) may be applied to the structure of the sub-model 220. An output layer of the sub-model 220 may include values determined by calculations performed for a linearization computation 220d. The values included in the output layer may be the text probability information.

According to an embodiment, the electronic device may train the sub-model 220 using the teacher model 210 to which the image 201 having a relatively high resolution is inputted. For example, the electronic device executing the teacher model 210 may determine, from the image 201, the text probability map indicating one or more characters associated with the image 201. The electronic device may train the sub-model 220 using another image having a lower resolution than the image 201 and the determined text probability map.

Referring to FIG. 2, the output layer of the sub-model 220 may be associated with the linear computation 220d. In the sub-model 220, implicit information including a result of performing the decoding prediction computation 220c (or a state of any one intermediate layer for the decoding prediction computation 220c) and to be used in the linear computation 220d may be provided to a fusion layer 243. Prior to being provided to the fusion layer 243, implicit information may be inputted to a projection model 230. Using the projection model 230, the electronic device may sequentially perform a linear computation 232a, a Parametric rectified linear unit (ReLU) (PReLU) computation 232b (e.g., computations included in the sub-model 232), and a prior interpreter computation 234 for the implicit information. Implicit information that is at least partially changed by the projection model 230 may be inputted to the fusion layer 243. The projection model 230 may be referred to as a Non-CAtegorical Prior (NCAP) in terms of outputting implicit information (e.g., non-categorical information) of the sub-model 220 trained to generate categorical information. A combination of the sub-model 220 and the projection model 230 may be referred to as a scene-text recognizer (STR). Information outputted by the projection model 230 (e.g., information transmitted from the projection model 230 to the fusion layer 243) may be referred to as prior knowledge information.

The combination of the sub-model 220 and the projection model 230 may cause the electronic device executing the image restoration model to generate the output image 203 using textual information (e.g., the text probability information) inferred from the input image 202. The encoder, which is a combination of the spatial transformer networks (STN) computation 241 and the convolution computation 242, may cause the electronic device executing the image restoration model to generate the output image 203 using nontextual information (e.g., the structural information) inferred from the input image 202. In terms of both the textual information and the nontextual information being used, the image restoration model may be a model supporting multimodality.

Referring to FIG. 2, the fusion layer 243 may be configured to combine implicit information of an intermediate layer of the sub-model, which is positioned prior to an output layer trained to output a text probability map and the feature information. For example, the electronic device may perform calculations indicated by the fusion layer 243 by using both feature information including a result of performing the convolution computation 242 of the encoder and the text probability map outputted or generated from the sub-model 220 and/or the projection model 230.

Referring to FIG. 2, the image restoration model may perform a decoder computation 244 to generate the output image 203 having a resolution higher than a resolution of the input image 202 by using information generated by the fusion layer 243. The decoder computation 244 may be trained to generate the output image 203 that has a resolution greater than the input image 202 and/or a size wider than the input image 202, and that is associated with the input image 202 (e.g., including content of the input image 202) by using the information generated by the fusion layer 243. The output image 203 may be provided as a result of restoring or enhancing the input image 202.

As described above, according to an embodiment, the electronic device may generate or obtain the output image 203 from the input image 202 by executing the image restoration model including the sub-model 220 trained to output the text probability map indicating one or more characters indicated as being captured by the input image 202, and positions of the one or more characters. The image restoration model may include the fusion layer 243 connected (e.g., indirectly connected through the projection model 230) to the intermediate layer (e.g., an intermediate layer to perform the decoding prediction computation 220c) of the sub-model 220 to extract the implicit information used to determine the text probability map, which is explicit information. For example, in order to reduce or prevent distortion of the output image 203 due to an error (e.g., a result of incorrectly recognizing at least one character from the input image 202) that may be included in the text probability map, the electronic device may fuse or generate the output image 203 by using the implicit information, which is used to determine the text probability map and includes various information on the input image 202 compared to the text probability map.

In an embodiment, since the implicit information includes higher-dimensional information compared to the text probability map, the electronic device may effectively resolve a domain gap due to a resolution difference between the input image 202 and the output image 203. For example, without a domain transfer, the electronic device may obtain or generate information (e.g., the implicit information) to be used to reduce or remove the domain gap.

In an embodiment, after the sub-model 220 included in the image restoration model to restore the output image 203 from the input image 202 is trained by the teacher model 210, the sub-model 220 configured to obtain information (e.g., the text probability map) on one or more characters may be retrained. The retrained sub-model 220 may generate or output a feature (e.g., a discriminative feature) useful to remaining layers (e.g., the projection model 230, the fusion layer 243, and/or the decoder 244) of the image restoration model that is executed by generating the output image 203 connected to the sub-model 220. The image restoration model including the retrained sub-model 220 may be trained using ground truth data (e.g., a pair of the output image 203 and the input image 202 obtained by distorting the output image 203 and having a smaller resolution and/or a smaller size than the output image 203).

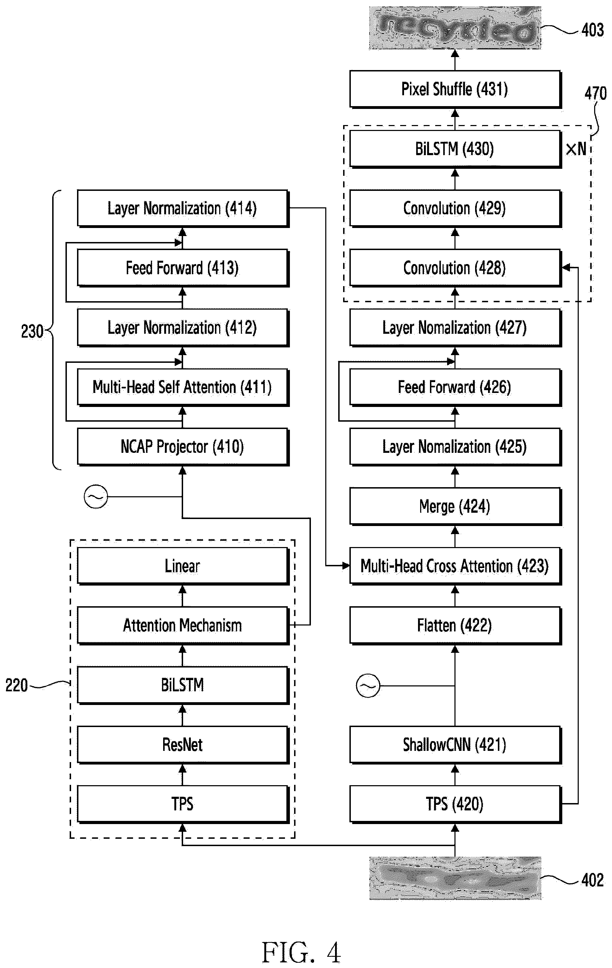

For example, the image restoration model may be trained to output the output image 203 as a result of enhancing the input image 202 by a training process of a first step of retraining the pre-trained sub-model 220 and a second step of training the image restoration model including the retrained sub-model 220. The first step of the training process will be described with reference to FIG. 3. The second step of the training process will be described with reference to FIG. 4.

FIG. 3 illustrates an exemplary block diagram of a structure of a sub-model 220 in an image restoration model trained to output a text probability map. The electronic device 101 and/or the processor 110 of FIG. 1 may obtain or execute the sub-model 220 and/or the image restoration model including the sub-model 220 described with reference to FIG. 3, by executing an image restoration program 125.

According to an embodiment, based on receiving an image, the electronic device may obtain the sub-model 220 trained to output a text probability map indicating one or more characters associated with the image. The electronic device may perform (e.g., fine-tuning) training again on the obtained sub-model 220 using a loss function. The loss function may be set or defined to generate explicit information (e.g., text probability information) outputted from the sub-model 220 as well as implicit information indicating a discriminative feature to be used by the image restoration model including the sub-model 220.

Referring to FIG. 3, an exemplary structure of the sub-model 220 having a structure of a TRBA is illustrated. Based on the structure of the TRBA, the sub-model 220 may include a chain connection of a TPS model 310 for a TPS computation, a backbone model 320 (e.g., ResNET), a BiLSTM 330, a first feed-forward model 340, a plurality of RNN decoders 350, and a second feed-forward model 360. The electronic device 101 may input an image 301 ( $x \in \mathbb{R}^{h \times w \times c}$ ) as an input layer of the TPS model 310. x of the $x \in \mathbb{R}^{h \times w \times c}$ may mean an input image (e.g., the image 301) inputted to an input layer. For example, the image 301 having a size of a height h and a width w and having c number of channels (e.g., three channels each of red, green, and blue) may be indicated.

In an embodiment, the sub-model 220 may be trained (e.g., pre-trained) to output explicit information p of Equation 1.

【Equation 1】

$$p(y_{hr}) = STR(x_{HR})$$

The explicit information p of Equation 1 may include output data (e.g., P0, P1, ..., Pt) of the second feed-forward model 360 of FIG. 3. The output data Pt (herein, 0≤t≤1) of the second feed-forward model 360 may be determined based on output data h = [h1, h2, ..., hi] from a first timing (or a first time step) to a t-th timing (or a t-th time step) of the RNN decoders 350. The explicit information p of Equation 1 may be determined based on a projection of the output data h = [h1, h2, ..., hi] of the RNN decoders 350. For example, output data of the sub-model 220 may be set as in Equation 2.

【Equation 2】

$$t_{LR} = p(\tilde{y}_i|\{(\tilde{y}_1,\dots,\tilde{y}_{i-1},x) = g(h_i)\})$$

$h_i$ of Equation 2 may be an intermediate state vector of an intermediate layer (e.g., the RNN decoders 350) of the sub-model 220 of the t-th timing (or the t-th time step).

In an embodiment, the sub-model 220 may be trained by a loss function that increases and/or maximizes a difference and/or a margin of probabilities between classes determined by the sub-model 220, as well as cross-entropy loss. The loss function may be defined to generate a discriminative feature for classes (e.g., classes corresponding to each of a plurality of characters) of the sub-model 220 and/or to alleviate confusion between the classes. The loss function may be used to retrain the pre-trained sub-model 220 to output the explicit information p from the image 301.

For example, a loss function $\mathcal{L}_{str}$ set to retrain the sub-model 220 may be set to increase or maximize a distance and/or a margin from a decision boundary surface. For example, it may be defined to maximize the margin of the decision boundary surface between a specific class $y_i$ and another class $y_{j,j\neq i}$. For example, the loss function $\mathcal{L}_{str}$ may be defined as a sum $\mathcal{L}_{str} = \mathcal{L}_{rec} + \mathcal{L}_{aux}$ between $\mathcal{L}_{rec}$ of Equation 3 and $\mathcal{L}_{aux}$ of Equation 4.

【Equation 3】

$$\mathcal{L}_{rec} = -\sum_{t=0}^{l}\sum_{i=1}^{|A|} y_{t,i}\, log\, p_{t,i}$$

【Equation 4】

$$\mathcal{L}_{aux} = -min\left(1, \sum_{t=1}^{l}\sum_{i=1,i\neq p_{y_t}}^{|A|} log\left(p_{y_t} - p_{t,i} + \epsilon\right)\right)$$

$\mathcal{L}_{rec}$ of Equation 3 is a cross entropy for training the sub-model 220, and $p_{t,i}$ may indicate a probability of being matched to a i-th class among classes (e.g., characters) that may be distinguished by the sub-model 220. |A| of Equation 3 may indicate the total number of classes. 1 of Equation 3 may correspond to the number of RNN decoders 350. $\mathcal{L}_{aux}$ of Equation 4 may be defined to obtain a discriminative feature (or implicit information) using the sub-model 220. When training the sub-model 220 using the image 301 and truth data indicating one or more characters included in the image 301, $p_{y_t}$ of Equation 4 may indicate an output probability of the sub-model 220 corresponding to a character indicated as a correct answer by the truth data. Referring to Equation 3, since i does not match the character indicated as the correct answer (i ≠ $p_{y_t}$), $p_{t,i}$ may indicate the output probability of the sub-model 220 corresponding to character that is not the correct answer. $\varepsilon$ of Equation 4 may be a real number (e.g., $10^{-7}$) defined so that a result value of a log function is not reduced to a too small value (e.g., negative infinity). 1 of Equations 3 and 4 may indicate a length of a maximum character string, and i of Equations 3 and 4 may be a variable that changes in the total number |A| of the classes.

Using a loss function (e.g., $\mathcal{L}_{str} = \mathcal{L}_{rec} + \mathcal{L}_{aux}$) for a difference between the output data and the truth data of the sub-model 220 for the image 301, the sub-model 220 may be trained so that the output data h = [h1, h2, ..., hi] of the RNN decoders 350 has a discriminative feature. The output data h = [h1, h2, ..., hi] of the RNN decoders 350 may be used for execution and/or training of the image restoration model including the sub-model 220. Hereinafter, an exemplary structure of the image restoration model using the output data h = [h1, h2, ..., hi] outputted from the sub-model 220 as implicit information of the sub-model 220 will be described with reference to FIG. 3.

FIG. 4 illustrates an exemplary block diagram of a structure of an image restoration model executed by an electronic device according to an embodiment. The electronic device 101 and/or the processor 110 of FIG. 1 may execute or train the image restoration model described with reference to FIG. 4 by executing an image restoration program 125.

Referring to FIG. 4, the image restoration model may include a TPS model 420 and a shallow CNN 421. The electronic device 101 may extract low-level feature information by performing calculations indicated by the TPS model 420 and the shallow CNN 421, from an input image 402. By combining the feature information with position embedding data for a fusion operation, the electronic device 101 may obtain feature information of $F_v \in \mathbb{R}^{c\times hw}$. C of $\mathbb{R}^{c\times hw}$, which is a number indicating a dimension of feature information, may correspond to the number of dimensions of information outputted from an output layer of the shallow CNN 421. hw of $\mathbb{R}^{c\times hw}$ may indicate a size (e.g., the number of parameters arranged in one dimension) of flattened information (e.g., one-dimensional information) of the input image 402.

By performing calculations indicated by the TPS model 420, the electronic device 101 may adjust shapes of characters within the input image 402 so that the characters have uniform shapes. For example, information outputted from a Flatten model 422 connected to the shallow CNN 421 may correspond to $F_v$ of Equation 5.

【Equation 5】

$$F_v = Flatten\big(Enc_1\big(TPS(x_{LR})\big) + PE\big)$$

$x_{LR}$ of Equation 5 may indicate the input image 402 having a relatively low resolution. PE of Equation 5 may indicate position embedding data combined with feature information. Flatten of Equation 5 may indicate a computation of converting multidimensional information into one-dimensional information. $Enc_1$ of Equation 5 may indicate a computation performed in the shallow CNN 421. According to an embodiment, the image restoration model may be trained to use information (e.g., the position embedding data PE of Equation 5) indicating a spatial characteristic of an image to consider a distance between pixels within the image while calculating feature information.

In a state of processing the input image 402 using the image restoration model, the electronic device 101 may perform a first operation of processing the input image 402 using the TPS 420 and/or the shallow CNN 421 and a second operation of processing the input image 402 using the sub-model 220 in parallel (or substantially simultaneously). The first operation and the second operation may be performed substantially simultaneously by different processors included in the electronic device 101. By using the sub-model 220 in a state trained based on the operation described with reference to FIG. 3, the electronic device 101 may obtain implicit information $p_{NCAP} \in \mathbb{R}^{l \times embed}$ from the input image 402. Implicit information $p_{NCAP}$ may be determined or may be calculated, based on Equation 6.

【Equation 6】

$$p_{NCAP} \in \mathbb{R}^{l \times embed} = PReLU\left(STR_{stu,dec}\left(STR_{stu,enc}(x_{LR})\right) \cdot W_{proj}\right)$$
$$= PReLU\big(h \cdot W_{proj}\big)$$

A STR term of Equation 6 may mean a scene text recognizer, and $STR_{str,enc}$ may indicate a computation performed in a decoder (e.g., a group of BiLSTM, Attention mechanism, and Linear in the sub-model 220) of the sub-model 220. $STR_{str,enc}$ may indicate a computation performed by an encoder (e.g., ResNet in the sub-model 220) of the sub-model 220. $x_{LR}$ of Equation 6 may indicate the input image 402 having a relatively low resolution.

By using information (e.g., $p_{NCAP}$ of Equation 6) obtained from a NCAP projector 410, the electronic device may obtain, or calculate, feature information $F_p$ of Equation 7 from a projection model 230.

【Equation 7】

$$F_p = (p_{NCAP} + PE) \cdot W_p$$

By performing a softmax computation and/or a layer normalization computation on feature information obtained from the projection model 230, the electronic device may obtain or calculate feature information $F_p{'}$ of Equation 8.

【Equation 8】

$$F_p' = LN\left(softmax\left(\frac{Q_p K_p^T}{\sqrt{d}}\right)V_p + F_p\right)$$

From the feature information $F_p$ and $F_p{'}$ of Equations 7 and 8, the electronic device may obtain or calculate feature information $F_p{''}$ of Equation 9.

【Equation 9】

$$F_p'' = LN\big(F_p' \cdot W_p' + F_p'\big)$$

Equation 9 may correspond to self-attention of $F_p$' of Equation 8. For the self-attention, for example, Equation 9 may be defined to process the feature information $F_p$' of Equation 8 using a projection and a linear computation (LN) based on an fc layer. An addition computation (e.g., $+F_p$ computation and/or $+F_p'$ computation) of Equation 8 and Equation 9 may indicate a residual connection (or identity mapping).

According to an embodiment, the electronic device may process the implicit information obtained from the sub-model 220 using the projection model 230. In the projection model 230, the NCAP projector 410, a multi-head self-attention model 411, a first layer normalization model 412, a feed forward model 413, and a second layer normalization model 414 may be combined in a chain. Using the projection model 230, the electronic device may generate or obtain feature information $F_p \in \mathbb{R}^{1 \times proj}$ from the implicit information. The feature information generated by the projection model 230 may include non-categorical information recognized by the sub-model 220 from the input image 402.

According to an embodiment, the electronic device may perform multi-head cross-attention between the feature information $F_v \in \mathbb{R}^{c \times hw}$ of the shallow CNN 421 and the feature information $F_p \in \mathbb{R}^{1 \times proj}$ of the projection model 230 in a multi-head cross-attention model 423 of the image restoration model. $F_p'''$ of Equation 10 may indicate feature information outputted from the multi-head cross-attention model 423.

【Equation 10】

$$F_p''' = LN \left( softmax \left( \frac{Q_v K_p''^{T}}{\sqrt{d}} \right) V_p'' \right)$$

A query for performing multi-head cross-attention of Equation 10 may correspond to the feature information $\mathbb{R}^{c \times hw}$ of the shallow CNN 421. d of Equation 10 may indicate a dimension of a key vector. $Q_v$ of Equation 10, which is a projection (e.g., a projection based on an fc layer) of $F_v$ of Equation 5, may indicate a query vector. $K_p''$ and $V_p''$, which are projections (e.g., the projection based on the fc layer) of $F_p$" of Equation 9, may indicate a key vector and a value vector, respectively. LN of Equation 10 may indicate a linear computation. $Q_v K_p''^{T}$ computation of Equation 10 may indicate an attention score of self-attention. T computation of Equation 10 may indicate a matrix transpose computation.

A key and a value for performing the multi-head cross-attention of Equation 10 may have a size of $\mathbb{R}^{1 \times c}$ (e.g., $K_p'' \in \mathbb{R}^{1 \times c}$). It may indicate feature dimension (the number) of the shallow CNN 421 of $\mathbb{R}^{1 \times c}$. $Q_v \cdot K_p''^{T}$ of Equation 10 may be $= \mathbb{R}^{hw \times 1}$, and $Q_v \cdot K_p''^{T} \cdot V_p''$ of Equation 10 may be $\mathbb{R}^{hw \times c}$. Referring to Equation 10, feature information $F_p'''$ obtained using a softmax computation and a layer normalization (LN) computation may be obtained from the multi-head cross-attention model 423.

With respect to the feature information $F_p'''$ obtained from the multi-head cross-attention model 423, the electronic device may perform calculations indicated by a chain connection of a merge model 424, a first layer normalization model 425, a feedforward model 426, and a second layer normalization model 427. Referring to FIG. 4, a residual connection for an element-wise sum may be formed between the first layer normalization model 425 and the second layer normalization model 427. The residual connection may be formed between the first layer normalization model 425 and the second layer normalization model 427 independently of the feed forward model 426.

Referring to FIG. 4, with respect to information obtained from the second layer normalization model 427, the electronic device may repeatedly perform calculations based on a BiLSTM model 430 N times (e.g., 5 times). A combination of a first convolution model 428, a second convolution model 429, and the BiLSTM model 430 connected to the second layer normalization model 427 may be referred to as a decoder 470. In an embodiment, feature information F obtained from the second layer normalization model 427 and to be inputted to the decoder 470 may be indicated as

Equation 11.

【Equation 11】

$$F = LN\left(F_p''' \cdot W_f + F_p'''\right)$$

Wf of Equation 11, which is an fc layer (or weights of the fc layer), may indicate a layer defined for a projection computation and a computation of the layer. The decoder 470 may have a structure (sequential-recurrent block, SRB) in which calculations indicated by the BiLSTM model 430 are repeatedly performed N times. The electronic device 101 may increase a resolution and/or a size of an image (e.g., an image indicated by the feature information F of Equation 11) outputted by the decoder 470 by using a pixel shuffle model 431. For example, an output image 403 outputted from the pixel shuffle model 431 of the image restoration model may be determined based on Equation 12.

【Equation 12】

$$Restored\ Image = PixelSuffle\left(SRB(F_v, F)\right)$$

When training the image restoration model having the structure of FIG. 4 (e.g., a second step of a training process), a loss function to be used for training the image restoration model may indicate a difference between a truth image corresponding to the input image 402 and the output image 403. For example, a L1 distance (e.g., Manhattan distance and/or rectangular street grid) between the truth image and the output image 403 may be determined as the loss function. An embodiment is not limited thereto, and a L2 distance (or mean squared loss), a structural similarity index (SSIM), a triplex SSIM (TSSIM), and a Kullback-Leibler (KL) Divergence loss function for knowledge distillation may be used. For example, a loss function $\mathcal{L}_s$ based on the L2 distance may be defined as in Equation 13.

【Equation 13】

$$\mathcal{L}_s = |I_{SR} - I_{HR}|_2$$

$I_{SR}$ of Equation 13 may indicate the output image 403, and $I_{HR}$ may indicate a truth image. For training the image restoration model based on structural information of text, a loss function based on the TSSIM may be used, for example, such as a loss function $\mathcal{L}_{tssim}$ of Equation 14.

【Equation 14】

$$\mathcal{L}_{tssim} = 1 - TSSIM$$

$$\text{such that } TSSIM = \frac{\left(\mu_x\mu_y + \mu_y\mu_z + \mu_x\mu_z + C_1\right)\left(\sigma_{xy} + \sigma_{yz} + \sigma_{xz} + C_2\right)}{\left(\mu_x^2 + \mu_y^2 + \mu_z^2 + C_1\right)\left(\sigma_x^2 + \sigma_x^2 + \sigma_x^2 + C_2\right)}$$

In Equation 14, x may correspond to the degraded output image 403, y may correspond to the output image 403, and z may correspond to a truth image. Each of μ and σ of Equation 14 is a mean and standard deviation of corresponding images (e.g., x, y, and z). C of Equation 14 may be an epsilon value (e.g., a preset number set to prevent a zero division error).

According to an embodiment, the electronic device may perform training on the image restoration model by using the pre-trained sub-model 220. The image restoration model may include the TPS 420 and the shallow CNN 421, and may include an encoder for extracting feature information from the input image 402. The image restoration model may include a fusion layer (e.g., the multi-head cross-attention model 423) to combine implicit information of an intermediate layer prior to an output layer of the sub-model 220 which receives the input image 402 and the feature information. The image restoration model may include a decoder (e.g., the combination of the first convolution model 428, the second convolution model 429, and the BiLSTM model 430), that is connected to the fusion layer, to generate the output image 403 having a second resolution greater than a first resolution of the input image 402. The trained image restoration model may be provided as a portion of a software application (e.g., the image restoration program 125 of FIG. 1) to restore an image.

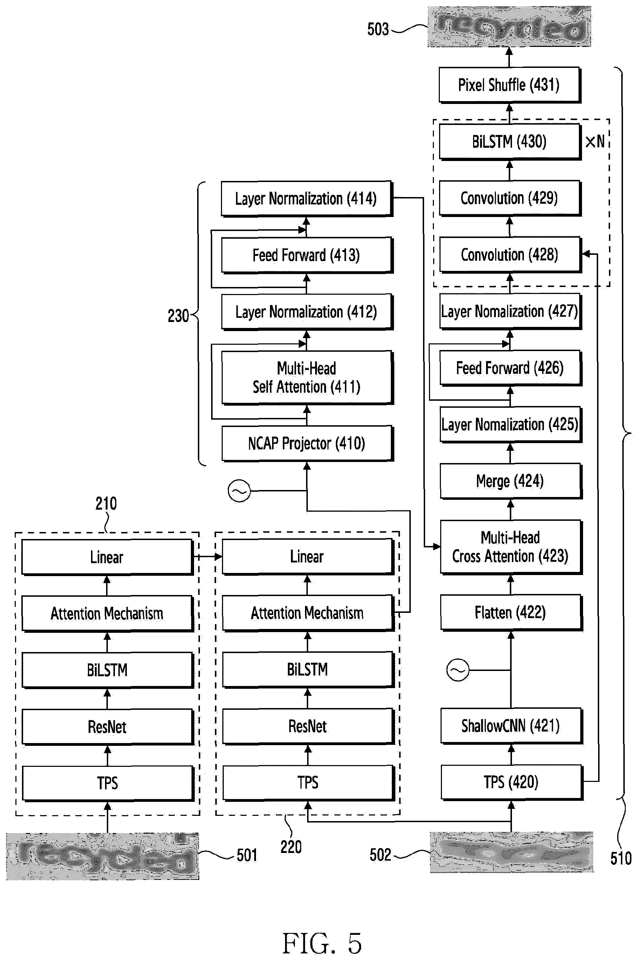

Hereinafter, an exemplary structure of an image restoration model connected to the teacher model 220 of FIG. 2 and/or FIG. 3 will be described with reference to FIG. 5.

FIG. 5 illustrates an exemplary block diagram of an image restoration model connected to a teacher model 210. The electronic device 101 and/or the processor 110 of FIG. 1 may obtain, generate, and/or train the image restoration model described with reference to FIG. 5 by executing an image restoration program 125.

As described above with reference to FIG. 3, output data of a sub-model 220 may include a projection of output data of an RNN decoder (e.g., the RNN decoders 350 of FIG. 3) as in Equation 2. An input of an NCAP projector 410 may include entire intermediate state vectors (e.g., hidden state vector) of the RNN decoder in each of the plurality of timings. In case that the sub-model 220 performs parallel decoding, the input of the NCAP projector 410 may include entire feature information obtained by the parallel decoding.

Output data of the teacher model 210 receiving an image 501 may be indicated as in Equation 15.

【Equation 15】

$$t_{HR} = STR_{tea,dec}\left(STR_{tea,enc}(x_{LR})\right) \cdot W_{c,HR}$$

The output data of the sub-model 220 may have a relationship of Equation 16. $t_{HR}$ of Equation 15 may indicate an output of the teacher model 210 to which a high-resolution image is inputted. For example, $t_{HR}$, which is information sequentially processed by an encoder and a decoder of an STR, may indicate information (e.g., probability distribution of text) projected by an fc layer. For example, $W_c$ of Equation 15 may indicate an fc layer, and $x_{LR}$ may indicate a low-resolution image.

【Equation 16】

$$t_{LR} \in \mathbb{R}^{1 \times |A|} = STR_{stu,dec}\left(STR_{stu,enc}(x_{LR})\right) \cdot W_{c,LR}$$

$t_{LR}$ of Equation 16 may indicate an output of the sub-model 220 to which a low-resolution image is inputted. For example, Equation 16 may indicate output data of the sub-model 220, which receives an image 502.

Based on implicit information obtained from the sub-model 220, the electronic device may obtain $p_{NCAP}$ of Equation 6 from the NCAP projector 410.

When training the sub-model 220, the electronic device may use a loss function $\mathcal{L}_{distill}$ of Equation 17 to reduce a domain gap (e.g., a domain difference between a high-resolution output image 503 and the low-resolution input image 502) of prior knowledge of the sub-model 220.

【Equation 17】

$$(1) \quad \mathcal{L}_{distill} = |t_{HR} - t_{LR}|_1 + D_{KL}(t_{LR}||t_{HR})$$

$$(2) \quad \mathcal{L}_{distill}\left(t_{LR}(\tau), t_{HR}(\tau)\right) = \beta \cdot \tau^2 \sum_i t_{HR,i}(\tau) \log \frac{t_{HR,i}(\tau)}{t_{LR,i}(\tau)} \, \mathcal{L}_{distill}$$

Equation (2) of Equation 17 may be a loss function based on a profile that is smooth (e.g., smoothness of kl divergence) based on temperature scaling, and Equation (1) of Equation 17 may be a loss function based on a profile that is sharp (e.g., smoothness of kl divergence) based on $|t_{HR} - t_{LR}|_1$. The electronic device may determine the loss function $\mathcal{L}_{distill}$ using any one of the two equations of Equation 17. $t_{HR}$ of Equation 17 and $t_{LR}$ of Equation 17 may indicate prior knowledge obtained by inputting each of a high-resolution image and a low-resolution image to the STR including the sub-model 220. $t_{HR}$ of Equation 17 may be generated from the frozen teacher model 210. $t_{LR}$ of Equation 17 may be generated from the sub-model 220 of a trainable state. The loss function of Equation 17 may be determined by another method (e.g., L1 distance). Referring to Equation 17, truth data $t_{HR}(\tau)$ of a soft label may be used to determine the loss function $\mathcal{L}_{distill}$. Additionally, truth data $t_{HR}$ may be used to generate a smoother profile. $\beta$ and $\tau$ of Equation 17 are parameters for controlling a soft label and smoothness, and may be set to, for example, 0.7 and 5, respectively.

A loss function $\mathcal{L}_{str}$ of the sub-model 220 may be determined by a loss function $\mathcal{L}_{aux}$ of Equation 18, which maximizes cross entropy loss (e.g., cross entropy of Equation 3) and a margin with a truth image, as in Equation 18. For example, in order to use a hard label for training, any one of the two equations of Equation 18 may be used.

【Equation 18】

$$(1) \quad \mathcal{L}_{str} = \mathcal{L}_{CE}(t_{LR}, y_{gt}), \quad \text{whereas,} \, \mathcal{L}_{CE}(t_{LR}, y_{gt}) = -\sum_{i} y_{gt,i} \log t_{LR,i}$$

$$(2) \quad \mathcal{L}_{str} = CE(p_{pred}, y_{gt}) + \mathcal{L}_{aux}$$

When Equation (1) of Equation 18 is used, cross entropy loss $\mathcal{L}_{CE}$ used in scene text recognition may be used. When Equation (2) of Equation 18 is used, an additional loss function $\mathcal{L}_{aux}$ that maximizes a second margin may be used. $y_{gt}$ of Equation 18 may indicate a correct answer label (e.g., ground truth data) for an image received as an input. In an exemplary embodiment of FIG. 5, $y_{gt}$ may be "recycled".

The loss function $\mathcal{L}_{aux}$ of Equation 18 may correspond to $\mathcal{L}_{aux}$ of Equation 4. With respect to the sub-model 220 trained by a loss function $\mathcal{L}_{str}$ of Equation 18, the electronic device may further apply a loss function that reduces a difference between an attention score of a high-resolution image and a low-resolution image and/or a loss function that reduces a difference between probability distribution of the high-resolution image and probability distribution of the low-resolution image. For example, the electronic device may use a loss function to focus on an area associated with one or more characters within the input image 502. For example, the electronic device may increase a weight for a string that may be confused by using weighted cross entropy (WCE), such as Equation 19.

【Equation 19】

$$\mathcal{L}_{txt} = \alpha \cdot \|A_{HR} - A_{SR}\|_1 + \beta \cdot WCE(p_{pred}, y_{gt})$$

For example, in Equation 19, $\alpha$ may be set to a numerical value such as 10, and $\beta$ may be set to a numerical value such as 0.0005. $\|A_{HR} - A_{SR}\|_1$ of Equation 19 may mean an L1 distance. Each of $A_{HR}$ and $A_{SR}$ of Equation 19 may indicate attention information (e.g., an attention map) of each of a high-resolution image and a low-resolution image. $p_{preg}$ of Equation 19 may indicate the output image 503. A loss function $\mathcal{L}_{txt}$ of Equation 19 may be defined to reduce a difference between the attention information $A_{SR}$ for the low-resolution image and the attention information $A_{HR}$ for the high-resolution image.

In an embodiment, the electronic device may at least partially train the image restoration model using a combination of the loss functions exemplified above (e.g., joint learning). A combination $\mathcal{L}_{total}$ of loss functions may be set as in Equation 20. Using $\mathcal{L}_{total}$ of Equation 20, which is an example of the WCE, backpropagation of an entire model, starting from a pixel shuffle model 431, may be performed. The backpropagation may be performed to reduce an error in the attention map and a logit. For example, the loss function $\mathcal{L}_{txt}$ of Equation 19 may be used to reduce an error between the attention map and text logit information obtained from an additional artificial intelligence model (e.g., text recognition network) to process the image 502. By the backpropagation, the entire image restoration model may be trained to reduce a difference between the image 403 and the image 502.

【Equation 20】

$$\mathcal{L}_{total} = \lambda_1 \mathcal{L}_s + \lambda_2 \mathcal{L}_{tssim} + \alpha \cdot \mathcal{L}_{distill} + (1 - \alpha) \cdot \mathcal{L}_{str} + \lambda_3 \mathcal{L}_{txt}$$

Numerical values such as $\lambda_1 = 1$, $\lambda_2 = 1$, $\lambda_3 = 0.01$ $\alpha=0.5$ of Equation 20 may be set. $\alpha$ of Equation 20 may be a parameter for adjusting a training ratio between $\mathcal{L}_{distill}$ of Equation 17 and $\mathcal{L}_{str}$ of Equation 18. An embodiment is not limited thereto. $\mathcal{L}_s$ of Equation 20 may be determined as in Equation 13. $\mathcal{L}_{tssim}$ of Equation 20 may be defined as in Equation 10. $\mathcal{L}_{distill}$ of Equation 20 may be defined as in Equation 17. $\mathcal{L}_{str}$ of Equation 20 may be defined as in

Equation 18. $\mathcal{L}_{\text{txt}}$ of Equation 20 may be defined as in Equation 19.

According to an embodiment, the electronic device may execute the image restoration model including the sub-model 220 and the projection model 230, which may be executed at least temporarily simultaneously with models 510 for restoring an input image 502. The models 510 may be combined with any sub-model 220 for recognizing a character that has been pre-trained. Using the sub-model 220, the electronic device may effectively obtain prior knowledge (or prior information) to be used to restore or enhance the input image 502.

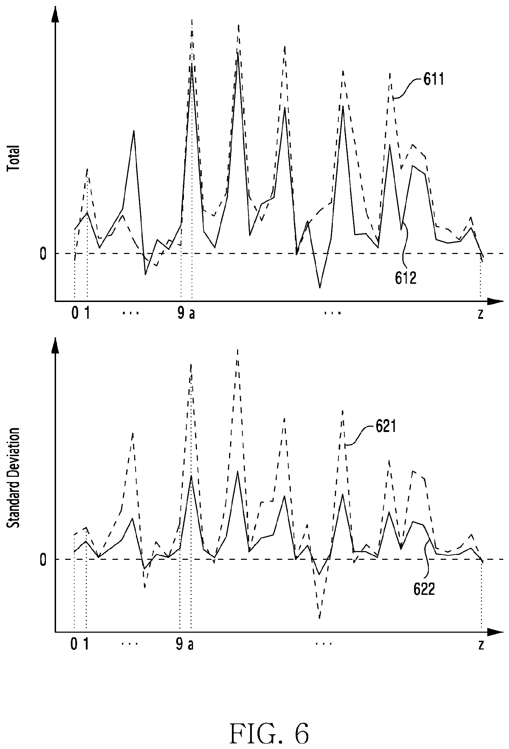

Hereinafter, a performance of the image restoration model configured to obtain the output image 503 from the input image 502 will be described with reference to FIGS. 6 to 7.

FIG. 6 illustrates graphs 611, 612, 621, and 622 for describing a performance of an electronic device executing an image restoration model according to an embodiment. The graphs of FIG. 6 may be empirical graphs indicating the performance of the image restoration model executed by the electronic device and/or the image restoration program of FIGS. 1 to 5.

Referring to FIG. 6, the graph 611 indicating a mean of the number of Top 5 predictions of characters (e.g., numbers from 0 to 9 and alphabets from a to z) and the graph 612 indicating the number of Top 1 predictions are illustrated. Referring to FIG. 6, the graph 621 indicating a standard deviation of the number of Top 5 predictions of characters and the graph 622 indicating a standard deviation of the number of Top 1 predictions are illustrated. Since an increase in a standard deviation means that there are fewer values around an mean value, the increase in the standard deviation may mean that accuracy of recognizing a character from an image is increased. For example, Table 1 may indicate a mean and a standard deviation of a result of predicting a character obtained by executing a sub-model (e.g., the sub-model 220 of FIG. 2) with respect to all characters.

[Table 1]

|          | Mean | | Std | |
| --- | --- | --- | --- | --- |
|          | Top5 | Top1 | Total | Top5 |
| Baseline | 448.583 | 408.944 | 67.048 | 159.964 |
| Ours | **484.028** | **435.056** | **71.161** | **169.166** |

"Ours" of Table 1 may indicate a mean and a standard deviation of a predicted result by executing the image restoration model according to an embodiment, and baseline of Table 1 may indicate a mean and a standard deviation of a predicted result by executing another model different from the image restoration model according to an embodiment.

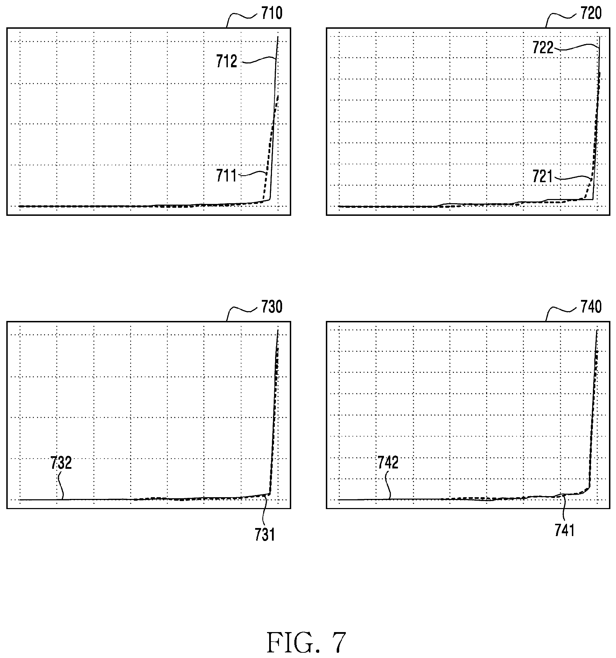

FIG. 7 illustrates graphs 711, 712, 721, 722, 731, 732, 741, and 742 for describing a performance of an electronic device executing an image restoration model according to an embodiment. Referring to FIG. 7, areas 710, 720, 730, and 740 corresponding to each of preset characters (e.g., 5, 9, u, and k) from a plurality of images are illustrated. For example, in the area 710, the graph 712 indicating a mean of Top 5 predicting a preset character '5' and the graph 711 indicating a baseline are illustrated. For example, in the area 720, the graph 722 indicating a mean of Top 5 predicting a preset character '9' and the graph 721 indicating a baseline are illustrated. For example, in the area 730, the graph 732 indicating a mean of Top 5 predicting a preset character 'u' and the graph 731 indicating a baseline are illustrated. For example, in the area 740, the graph 741 indicating a mean of Top 5 predicting a preset character 'k' and the graph 742 indicating a baseline are illustrated. Referring to the areas 710, 720, 730, and 740, in a result of predicting each of characters, a predicted value of a maximum predicted character may have a high value, and a frequency of predicting (e.g., confusing) a character less than or equal to Top 2 may be reduced.

For example, Table 2 may include a mean and a standard deviation of a result of predicting the preset characters using the sub-model.

[Table **2**]

|          | Top5 Mean | | | | Top1 Mean | | | |
| --- | --- | --- | --- | --- | --- | --- | --- | --- |
|          | 5 | 9 | k | u | 5 | 9 | k | u |
| Baseline | 222 | 87 | 166 | 424 | 133 | 63 | 137 | 382 |
| Ours | **229** | **92** | **183** | **482** | **206** | **80** | **156** | **429** |

For example, Table 3 may include the standard deviation of the result of predicting the preset characters using the sub-model.

[Table 3]

| | All Std | | | | Top5 Std | | | |
|---|---|---|---|---|---|---|---|---|
| | 5 | 9 | k | u | 5 | 9 | k | u |
| Baseline | 24.682 | 10.426 | 22.389 | 62.459 | 52.278 | 23.174 | 51.963 | 148.607 |
| Ours | **33.690** | **13.012** | **25.523** | **70.085** | **80.111** | **30.800** | **59.741** | **166.338** |

In order to check whether prior knowledge generated by the sub-model is biased, the electronic device may calculate a relationship between prior knowledge accuracy and STISR accuracy. The relationship may use Pearson Correlation Coefficient of Equation 21.

【Equation 21】

$$\gamma_{XY} = \frac{\sum_i^n (X_i - \bar{X})(Y_i - \bar{Y})}{\sqrt{\sum_i^n (X_i - \bar{X})^2}\sqrt{\sum_i^n (Y_i - \bar{Y})^2}}$$

X of Equation 21 may indicate an output of the sub-model and/or a word error rate (WER) of a logit. X of Equation 21 may be defined as the WER and a CER of text logits of a student recognizer. Y of Equation 21 may be defined as Y = STISR WER and CER. The CER may be an error rate of a character (e.g., a character error rate). n of Equation 21 may indicate the number of total data, and i may indicate an index defined to perform a sum computation.

In an embodiment, Table 4 may indicate a Pearson relationship between prior knowledge and STISR accuracy.

[Table 4]

| Method | Prior Error Rate | | SR Error Rate | | Pearson Correlation | |
|---|---|---|---|---|---|---|
| | WER | CER | WER | CER | WER | CER |
| TATT | 52.3% | 32.2% | 47.2% | 30.7% | 0.7146 | 0.8026 |
| TATT w/ Ours | 37.4% | 21.3% | 43.3% | 27.1% | 0.6626 | 0.7359 |
| Δ | **-14.9%** | **-11.0%** | **-3.9%** | **-3.6%** | **-7.3%** | **-8.3%** |
| LEMMA | 76.1% | 58.3% | 44.0% | 28.3% | 0.3465 | 0.4580 |
| LEMMA w/ Ours | 77.6% | 60.5% | 42.1% | 26.9% | 0.3279 | 0.3052 |
| Δ | **+1.5%** | **+2.2%** | **-1.95%** | **-1.34%** | **-5.4%** | **-33.4%** |

Referring to Table 4, compared to a conventional method (baseline), the Pearson Correlation Coefficient of the image restoration model (e.g., Ours) according to an embodiment may be relatively reduced in both the WER and the CER. The Pearson Correlation Coefficient of the image restoration model being reduced may mean that the image restoration model is not dependent on incomplete information (e.g., prior knowledge).

In an embodiment, Table 5 may indicate a relationship between performance improvement of the electronic device and a parameter increase amount.

[Table 5]

| Method | NCAP | Adapters | MACs | #Params |
|---|---|---|---|---|
| TATT | | | 4.60 G | 31.44 M |
| TATT w/ Ours | √ | | 4.64 G | 31.52 M |
| | √ | √ | 4.43 G | 31.52 M |
| Δ | | | **-3.7%** | **+0.3%** |
| LEMMA | | | 6.69 G | 39.75 M |
| LEMMA w/ Ours | √ | | 6.69 G | 39.90 M |
| | √ | √ | 6.71 G | 39.90 M |
| Δ | | | **+0.3%** | **+0.4%** |

Referring to Table 5, when a parameter of the image restoration model is increased by approximately 0.3%, performance improvement may be expected. According to an embodiment, the electronic device may use a commonly used adapter (e.g., multi-layer perceptron (MLP)) and/or a convolution type adapter to execute the image restoration model. In an embodiment, when a 1×1 convolution type adapter is used, the performance may be relatively further improved.

As described above, the electronic device according to an embodiment may execute the image restoration model configured to generate text-related information (e.g., a text probability map) from an image. The image restoration model may include the sub-model that is pre-trained to generate the information from the image. The image restoration model may restore or enhance the image using implicit information used to generate explicit information (e.g., one or more characters associated with an image, and a relative position of the one or more characters) outputted from the sub-model. Since an image is restored using information associated with text, the electronic device may be trained to interpret a license plate and/or a sign plate.

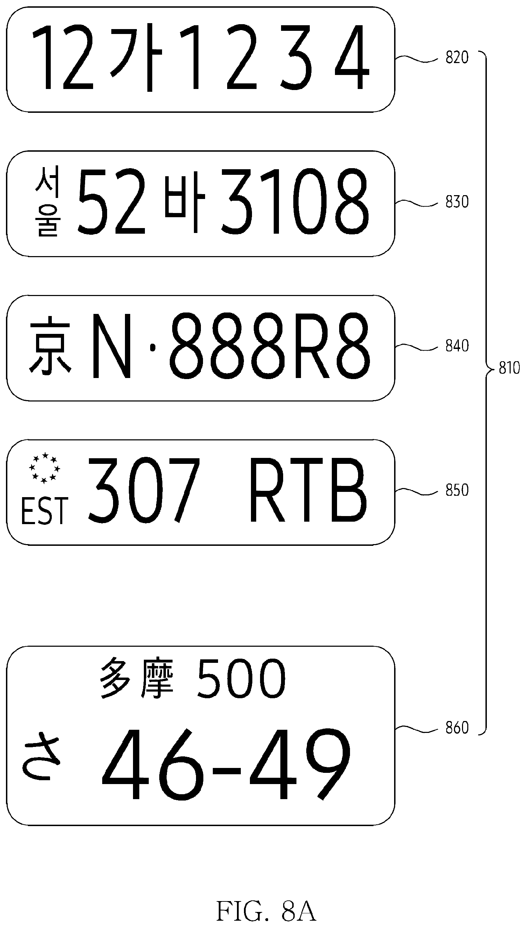

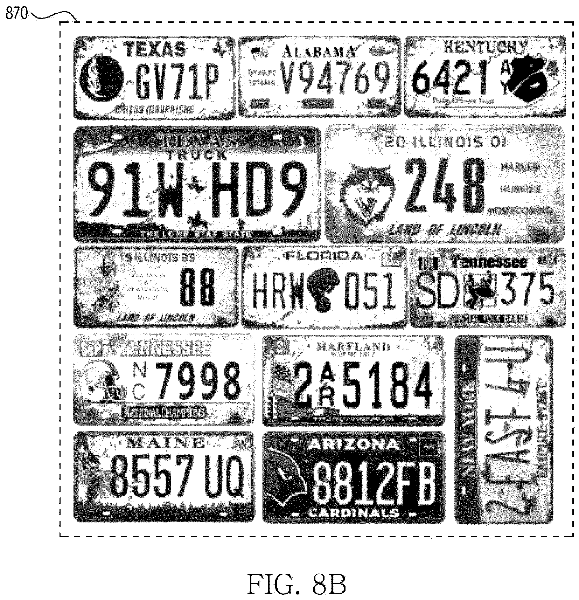

Hereinafter, license plates restored by the image restoration model are exemplarily illustrated with reference to FIGS. 8A and/or 8B.

FIGS. 8A and 8B illustrate at least one license plate (or number plate), which is a subject included in an image restored by an image restoration model according to an embodiment.

Referring to FIG. 8A, images 810 including at least one license plate obtained from the image restoration model are illustrated. The images 810 may be outputted from, or provided by, an electronic device that executes the image restoration model as a result of restoring or enhancing a low-resolution input image (e.g., the input image 202 of FIG. 2).

For example, the electronic device may generate an image 820 including a license plate based on the law of the Republic of Korea. The image 820 may include numbers (e.g., 12) indicating a type of a vehicle, an alphabet (e.g., "가") indicating a purpose of the vehicle, and numbers (e.g., 1234) indicating a serial number uniquely assigned to the vehicle. For example, the electronic device may obtain an image 830 including a license plate based on the law of the Republic of Korea. The image 830 may further include, with respect to the image 820, characters (e.g., a place name such as "Seoul") indicating an area associated with the license plate. A background color of the license plate represented through the images 820 and 830 may indicate a category (e.g., a private vehicle) of the vehicle defined by the law of the Republic of Korea.

For example, the electronic device may generate an image 840 including a license plate based on the law of China. In the image 840, a character (e.g., 京) indicating an area associated with the license plate and a character (e.g., N) indicating a city (e.g., a sub-area of the area) associated with the license plate may include information on the area or purpose. The image 840 may include serial numbers (e.g., 888R8) uniquely assigned to a vehicle. A color of the license plate represented through the image 840 may indicate a category (e.g., a passenger car, a large vehicle, a bus, a truck, and/or a motorcycle) of the vehicle.

For example, the electronic device may generate an image 850 including a license plate based on the law of the European Union. The image 850 may include a symbol indicating the European Union, characters (e.g., EST) indicating an area associated with the license plate, and serial numbers (e.g., "307 RTB") uniquely assigned to a vehicle on which the license plate is mounted. An embodiment is not limited thereto, and the image 850 may further include a flag of a country in which the vehicle on which the license plate is registered as a country affiliated with the European Union.

For example, the electronic device may generate an image 860 including a license plate based on the law of Japan. The image 860 may include characters (e.g., 多摩) indicating an area, numbers (e.g., 500) indicating a category of a vehicle, a character indicating a purpose of a business associated with the vehicle, and serial numbers (e.g., 46-49) uniquely assigned to the vehicle on which the license plate is mounted.

Referring to FIG. 8B, images 870 including a license plate based on the law of the United States generated by the electronic device according to an embodiment are illustrated. Referring to the images 870, based on the law of the United States, the license plate including an image and/or a figure defined by a state government of the United States may be generated. The license plate may include text (e.g., "TEXAS", "ALABAMA", "KENTUCKY", and the like) indicating a state government together with an image and/or a figure indicating the state government in which a vehicle is registered. Together with the text, the image representing the license plate may include a serial number (e.g., a combination of alphabets and/or numbers such as "GV71P") uniquely assigned to the vehicle.

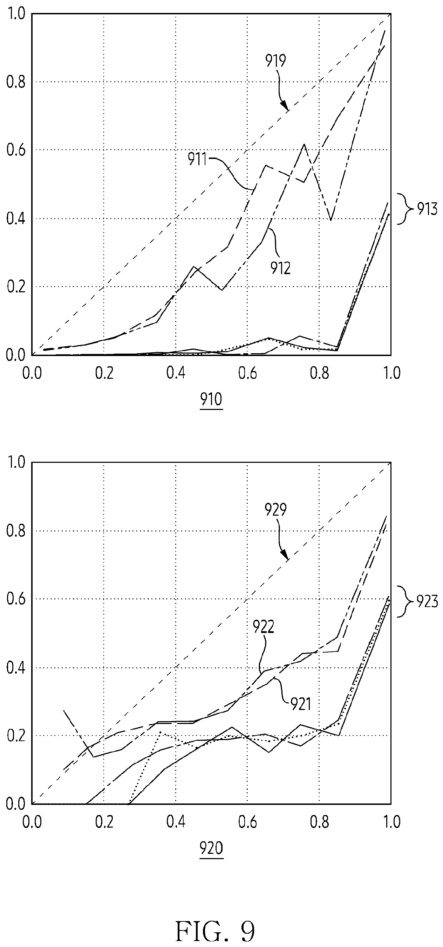

FIG. 9 is a diagram for describing an overconfidence phenomenon. When training of the super-resolution network 241, 242, 243, and 244 of FIG. 2 and training of a character recognition network (e.g., the sub-model 220 of FIG. 2) are performed simultaneously, an overconfidence phenomenon may occur due to a difference in training speed between the super-resolution network and the character recognition network. The overconfidence phenomenon may include a phenomenon of predicting an incorrect character with a high probability value from an image including a character that is difficult to infer. The overconfidence phenomenon may negatively affect a result (e.g., character probability distribution) of the character recognition network (e.g., the sub-model 220 of FIG. 2). According to an embodiment, an electronic device may reduce the overconfidence phenomenon by using a loss function that combines hard-level truth data and a soft label (e.g., output of a teacher model), as described above with reference to Equation 17 and Equation 18.

Referring to FIG. 9, graphs 910 and 920 indicating reliability at each of a word level and a character level are illustrated. An x-axis of the graphs 910 and 920 may indicate a probability value corresponding to a character recognized from a neural network. A y-axis of the graphs 910 and 920 may indicate a probability (e.g., accuracy) that a character recognized by the neural network is a correct answer. As the probability value and the accuracy are more proportional, it may be explained that the overconfidence phenomenon is reduced, as in baselines 919 and 929 of the graphs 910 and 920.

A line 911 of the graph 910 may indicate an ideal relationship between accuracy and reliability of an image restoration model of the electronic device. A line 912 of the graph 910 may indicate accuracy of the image restoration model trained based on a soft label. Lines 913 of the graph 910 may indicate accuracy of the image restoration model trained based on a hard label. A line 921 of the graph 920 may indicate an ideal relationship between accuracy and reliability of the image restoration model of the electronic device. A line 922 of the graph 920 may indicate the accuracy of the image restoration model trained based on a soft label. Lines 923 of the graph 920 may indicate accuracy of the image restoration model trained based on a hard label. When trained with only the hard label, the accuracy may be reduced compared to a probability value. When trained with only the soft label, the overconfidence phenomenon is reduced, but a performance may be degraded. Referring to the graphs 910 and 920 of FIG. 9, the lines 911 and 921 indicating the accuracy of the image restoration model of the electronic device according to an embodiment may be positioned closer to the baselines 919 and 929 (e.g., a baseline indicating accuracy of the image restoration model with minimized overconfidence phenomenon) indicating ideal accuracy than the other lines 912, 913, 922, and 923.

In an embodiment, a method of increasing or enhancing a resolution of an image in which one or more characters are captured using a model trained to output explicit information such as a text probability map may be required. In an embodiment, a method of increasing or enhancing the resolution of the image in which one or more characters are captured using implicit information of an intermediate layer in the model trained to output the explicit information may be required. As described above, according to an embodiment, a non-transitory computer readable storage medium storing instructions may be provided. The instructions, when executed by at least one processor of an electronic device individually or collectively, may cause the electronic device to receive a request to restore a first image of a first resolution, to an image of a second resolution larger than the first resolution. The instructions, when executed by the at least one processor individually or collectively, may cause the electronic device to, based on the received request, execute an image restoration model including, an encoder to extract feature information from the first image, a sub-model to determine a text-probability map with respect to the first image, a fusion layer to combine implicit information of an intermediate layer of the sub-model, which is positioned prior to an output layer trained to output the text probability map, and the feature information, and a decoder to generate an image of the second resolution, which is connected to the fusion layer. The instructions, when executed by the at least one processor individually or collectively, may cause the electronic device to provide, as a response to the request, a second image of the second resolution that is obtained based on execution of the image restoration model. According to an embodiment, the electronic device may increase or enhance the resolution of the image in which one or more characters are captured using a model trained to output explicit information such as the text probability map. According to an embodiment, the electronic device may increase or enhance the resolution of the image in which one or more characters are captured by using the implicit information of the intermediate layer in the model trained to output the explicit information.

For example, the instructions, when executed by the at least one processor of the electronic device individually or collectively, may cause the electronic device to execute the image restoration model including the fusion layer, which is connected to the intermediate layer to extract the implicit information used to determine the text probability map which is explicit information.

For example, the sub-model may be trained to output the text probability map indicating one or more characters indicated as being captured by the first image, and positions of the one or more characters.

For example, the sub-model may be pre-trained by a teacher model, the teacher model is executed using parameters more than parameters for the sub-model.

For example, the instructions, when executed by the at least one processor of the electronic device individually or collectively, may cause the electronic device to receive, from an external electronic device through communication circuitry of the electronic device, a first signal including the request and a third image. The instructions, when executed by the at least one processor of the electronic device individually or collectively, may cause the electronic device to, based on receiving the first signal, segment, within the third image, a portion associated with a license plate as the first image. The instructions, when executed by the at least one processor of the electronic device individually or collectively, may cause the electronic device to, based on obtaining the second image from the image restoration model executed using the segmented first image, transmit a second signal including the second image to the external electronic device.

As described above, according to an embodiment, an electronic device may comprise memory storing instructions, and at least one processor configured to execute the instructions. The instructions, when executed by the at least one processor individually or collectively, may cause the electronic device to receive a request to restore a first image of a first resolution, to an image of a second resolution larger than the first resolution. The instructions, when executed by the at least one processor individually or collectively, may cause the electronic device to, based on the received request, execute an image restoration model including an encoder to extract feature information from the first image, a sub-model to determine a text-probability map with respect to the first image, a fusion layer to combine implicit information of an intermediate layer of the sub-model, which is positioned prior to an output layer trained to output the text probability map, and the feature information, and a decoder to generate an image of the second resolution, which is connected to the fusion layer. The instructions, when executed by the at least one processor individually or collectively, may cause the electronic device to provide, as a response to the request, a second image of the second resolution that is obtained based on execution of the image restoration model.

For example, the instructions, when executed by the at least one processor individually or collectively, may cause the electronic device to execute the image restoration model including the fusion layer, which is connected to the intermediate layer to extract the implicit information used to determine the text probability map which is explicit information.

For example, the sub-model may be trained to output the text probability map indicating one or more characters indicated as being captured by the first image, and positions of the one or more characters.

For example, the sub-model may be pre-trained by a teacher model, the teacher model is executed using parameters more than parameters for the sub-model.

For example, the instructions, when executed by the at least one processor individually or collectively, may cause the electronic device to receive, from an external electronic device through communication circuitry of the electronic device, a first signal including the request and a third image. The instructions, when executed by the at least one processor individually or collectively, may cause the electronic device to, based on receiving the first signal, segment, within the third image, a portion associated with a license plate as the first image. The instructions, when executed by the at least one processor individually or collectively, may cause the electronic device to, based on obtaining the second image from the image restoration model executed using the segmented first image, transmit a second signal including the second image to the external electronic device.

As described above, according to an embodiment, a method of an electronic device may be provided. The method may comprise, based on receiving an image, obtaining a sub-model trained to output a text-probability map indicating one or more characters associated with the image. The method may comprise performing, using the sub-model, training of an image restoration model including an encoder to extract feature information from an input image, a fusion layer to combine implicit information of an intermediate layer of the sub-model, prior to an output layer of the sub-model which receives the input image, and the feature information, and a decoder, that is connected to the fusion layer, to generate an output image having a second resolution greater than a first resolution of the input image. The method may comprise providing the image restoration model as a portion of a software application to restore the image.

For example, the image restoration model may include the fusion layer that is connected to the intermediate layer to extract the implicit information used to determine the text probability map which is explicit information.

For example, the sub-model may be trained to output the text probability map indicating one or more characters indicated as being captured by the input image, and positions of the one or more characters.

For example, the obtaining may comprise obtaining the sub-model using a teacher model that is executed using parameters more than parameters for the sub-model.

For example, the providing may comprise, in response to a request to restore a portion associated with a license plate segmented from a source image, executing the image restoration model.

As described above, according to an embodiment, an electronic device may comprise memory storing instructions, and at least one processor configured to execute the instructions. The instructions, when executed by the at least one processor individually or collectively, may cause the electronic device to, based on receiving an image, obtain a sub-model trained to output a text-probability map indicating one or more characters associated with the image. The instructions, when executed by the at least one processor individually or collectively, may cause the electronic device to perform, using the sub-model, training of an image restoration model including an encoder to extract feature information from an input image, a fusion layer to combine implicit information of an intermediate layer of the sub-model, prior to an output layer of the sub-model which receives the input image, and the feature information, and a decoder, that is connected to the fusion layer, to generate an output image having a second resolution greater than a first resolution of the input image. The instructions, when executed by the at least one processor individually or collectively, may cause the electronic device to provide the image restoration model as a portion of a software application to restore the image.

For example, the image restoration model may include the fusion layer that is connected to the intermediate layer to extract the implicit information used to determine the text probability map which is explicit information.

For example, the sub-model may be trained to output the text probability map indicating one or more characters indicated as being captured by the input image, and positions of the one or more characters.

For example, the instructions, when executed by the at least one processor individually or collectively, may cause the electronic device to obtain the sub-model using a teacher model that is executed using parameters more than parameters for the sub-model.

For example, the instructions, when executed by the at least one processor individually or collectively, may cause the electronic device to, in response to a request to restore a portion associated with a license plate segmented from a source image, execute the image restoration model.

The above-described device may be implemented as hardware components, software components, and/or a combination of hardware components and software components. For example, the devices and components described in the embodiments may be implemented using one or more general-purpose computers or special-purpose computers, such as e.g., a processor, a controller, an arithmetic logic unit (ALU), a digital signal processor, a microcomputer, a field programmable gate array (FPGA), a programmable logic unit (PLU), a microprocessor, or any other device capable of executing and responding to instructions. The processing device may perform an operating system (OS) and one or more software applications performed on the operating system. Further, the processing device may access, store, manipulate, process, and generate data in response to the execution of the software. For convenience of understanding, it may be described that one processing device is used. However, those skilled in the art may understand that the processing device may include a plurality of processing elements and/or a plurality of types of processing elements. For example, the processing device may include a plurality of processors or one processor and one controller. In addition, other processing configurations such as parallel processors are also possible.

The software may include a computer program, a code, an instruction, or one or more combinations thereof, and may configure a processing device to operate as desired or may independently or collectively instruct the processing device. Software and/or data may be interpreted by a processing device or may be embodied in any type of machine, component, physical device, computer storage medium, or device to provide a command or data to the processing device. Software may be distributed on a networked computer system and stored or executed in a distributed manner. Software and data may be stored in one or more computer-readable recording media.

The method according to an embodiment of the disclosure may be implemented in the form of program commands executable by various computer means and recorded on a computer-readable medium. In this case, the medium may be a persistent storage of a computer-executable program, or it may be a temporary storage for execution or download. Further, the medium may be various recording means or storage means in which a single piece of hardware or a plurality of pieces of hardware are combined, and the medium is not limited to a medium directly connected to a computer system, and may be distributed on a network. Examples of the medium may include a magnetic medium such as a hard disk, a floppy disk, and a magnetic tape, an optical recording medium such as a compact disc read only memory (CD-ROM) and a digital versatile disc (DVD), a magneto-optical medium such as a floptical disk, and a read only memory (ROM), a random access memory (RAM), a flash memory, etc. configured to store program instructions. In addition, examples of other media include recording media or storage media managed by an application store that distributes applications, a site that supplies or distributes various other software, a server, and the like.

As described above, although the embodiments have been described with reference to limited embodiments and drawings, various modifications and modifications may be made from the above description by those skilled in the art. For example, even if the described techniques are performed in a different order from the described method, and/or components such as the described system, structure, device, circuit, etc. are combined or combined in a different form from the described method, or are replaced or substituted by other components or equivalents, appropriate results may be achieved.

Therefore, other implementations, other embodiments, and those equivalent to the scope of the patent claim also fall within the scope of the patent claims to be described later.

**Claims**

1. A non-transitory computer readable storage medium storing instructions, wherein the instructions, when executed by at least one processor of an electronic device individually or collectively, cause the electronic device to:

   receive a request to restore a first image of a first resolution, to an image of a second resolution larger than the first resolution;
   based on the received request, execute an image restoration model including:

   an encoder to extract feature information from the first image;
   a sub-model to determine a text probability map with respect to the first image;
   a fusion layer to combine implicit information of an intermediate layer of the sub-model, which is positioned prior to an output layer trained to output the text probability map, and the feature information; and
   a decoder to generate an image of the second resolution, which is connected to the fusion layer,

provide, as a response to the request, a second image of the second resolution that is obtained based on execution of the image restoration model.

2. The non-transitory computer readable storage medium of claim 1, wherein the instructions, when executed by the at least one processor of the electronic device individually or collectively, cause the electronic device to: execute the image restoration model including the fusion layer, which is connected to the intermediate layer to extract the implicit information used to determine the text probability map which is explicit information.

3. The non-transitory computer readable storage medium of claim 1, wherein the sub-model is trained to output the text probability map indicating one or more characters indicated as being captured by the first image, and positions of the one or more characters.

4. The non-transitory computer readable storage medium of claim 3, wherein the sub-model is pre-trained by a teacher model, the teacher model is executed using parameters more than parameters for the sub-model.

5. The non-transitory computer readable storage medium of claim 1, wherein the instructions, when executed by the at least one processor of the electronic device individually or collectively, cause the electronic device to:

   receive, from an external electronic device through communication circuitry of the electronic device, a first signal including the request and a third image;
   based on receiving the first signal, segment, within the third image, a portion associated with a license plate as the first image;
   based on obtaining the second image from the image restoration model executed using the segmented first image, transmit a second signal including the second image to the external electronic device.

6. An electronic device comprising:

   memory storing instructions; and
   at least one processor configured to execute the instructions,
   wherein the instructions, when executed by the at least one processor individually or collectively, cause the electronic device to:

      receive a request to restore a first image of a first resolution, to an image of a second resolution larger than the first resolution;
      based on the received request, execute an image restoration model including:

         an encoder to extract feature information from the first image;
         a sub-model to determine a text probability map with respect to the first image;
         a fusion layer to combine implicit information of an intermediate layer of the sub-model, which is positioned prior to an output layer trained to output the text probability map, and the feature information; and
         a decoder to generate an image of the second resolution, which is connected to the fusion layer,

      provide, as a response to the request, a second image of the second resolution that is obtained based on execution of the image restoration model.

7. The electronic device of claim 6, wherein the instructions, when executed by the at least one processor individually or collectively, cause the electronic device to: execute the image restoration model including the fusion layer, which is connected to the intermediate layer to extract the implicit information used to determine the text probability map which is explicit information.

8. The electronic device of claim 6, wherein the sub-model is trained to output the text probability map indicating one or more characters indicated as being captured by the first image, and positions of the one or more characters.

9. The electronic device of claim 8, wherein the sub-model is pre-trained by a teacher model, the teacher model is executed using parameters more than parameters for the sub-model.

10. The electronic device of claim 6, wherein the instructions, when executed by the at least one processor individually or collectively, cause the electronic device to:

receive, from an external electronic device through communication circuitry of the electronic device, a first signal including the request and a third image;
based on receiving the first signal, segment, within the third image, a portion associated with a license plate as the first image;
based on obtaining the second image from the image restoration model executed using the segmented first image, transmit a second signal including the second image to the external electronic device.

11. A method of an electronic device, comprising:

based on receiving an image, obtaining a sub-model trained to output a text probability map indicating one or more characters associated with the image;
performing, using the sub-model, training of an image restoration model including:

an encoder to extract feature information from an input image;
a fusion layer to combine implicit information of an intermediate layer of the sub-model prior to an output layer of the sub-model which receives the input image, and the feature information; and
a decoder, that is connected to the fusion layer, to generate an output image having a second resolution greater than a first resolution of the input image, and

providing the image restoration model as a portion of a software application to restore the image.

12. The method of claim 11, wherein the image restoration model includes the fusion layer that is connected to the intermediate layer to extract the implicit information used to determine the text probability map which is explicit information.

13. The method of claim 11, wherein the sub-model is trained to output the text probability map indicating one or more characters indicated as being captured by the input image, and positions of the one or more characters.

14. The method of claim 11, wherein the obtaining comprises:
obtaining the sub-model using a teacher model that is executed using parameters more than parameters for the sub-model.

15. The method of claim 11, wherein the providing comprises:
in response to a request to restore a portion associated with a license plate segmented from a source image, executing the image restoration model.

ELECTRONIC DEVICE (101)

102

PROCESSOR (110)

MEMORY (120)

IMAGE RESTORATION
PROGRAM (125)

COMMUNICATION
CIRCUITRY (130)

CAMERA (140)

150

152

160

A B C D

FIG. 1

FIG. 2

FIG. 3

FIG. 4

FIG. 5

FIG. 6

FIG. 7

12가1234 — 820

서울52바3108 — 830

京N·888R8 — 840

EST 307 RTB — 850

多摩 500
さ46-49 — 860

810

FIG. 8A

870

FIG. 8B

FIG. 9

## EUROPEAN SEARCH REPORT

**Application Number**

EP 25 16 1726

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANQI MA ET AL: "Text Prior Guided Scene Text Image Super-resolution", ARXIV.ORG, CORNELL UNIVERSITY LIBRARY, 201 OLIN LIBRARY CORNELL UNIVERSITY ITHACA, NY 14853, 30 June 2021 (2021-06-30), XP081996164, * abstract * * Section 3 * | 1-15 | INV. G06T3/4046 G06T3/4053 |
| A | MA JIANQI ET AL: "A Text Attention Network for Spatial Deformation Robust Scene Text Image Super-resolution", 2022 IEEE/CVF CONFERENCE ON COMPUTER VISION AND PATTERN RECOGNITION (CVPR), IEEE, 18 June 2022 (2022-06-18), pages 5901-5910, XP034194004, DOI: 10.1109/CVPR52688.2022.00582 [retrieved on 2022-09-27] * abstract * * Section 3 * | 1-15 | |

**TECHNICAL FIELDS SEARCHED (IPC)**

G06T
G06V

The present search report has been drawn up for all claims

| Place of search | Date of completion of the search | Examiner |
|---|---|---|
| Munich | 9 July 2025 | Tessens, Linda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)